# EUROPÄISCHE PATENTSCHRIFT

(11) **EP 0 916 446 B1**
(45) Veröffentlichungstag und Bekanntmachung des Hinweises auf die Patenterteilung: **02.05.2002**
(21) Anmeldenummer: 98115050.1
(22) Anmeldetag: 11.08.1998
(51) Int. Cl.: B23Q 1/60, B23Q 1/62, B23Q 1/48, B23Q 1/56

(54) **Werkzeugmaschine zur 3-achsigen Bearbeitung von Werkstücken**
Machine tool for the three-axis machining of workpieces
Machine-outil pour l'usinage à trois axes de pièces

(30) Priorität: 20.10.1997 DE 19745991; 14.02.1998 DE 19806085
(43) Veröffentlichungstag der Anmeldung: 19.05.1999
(73) Patentinhaber: Hüller Hille GmbH, 71636 Ludwigsburg (DE)
(72) Erfinder: Hanrath, Georg, Dr., 71729 Erdmannshausen (DE); Stengele, Gerald, 28211 Bremen (DE)
(74) Vertreter: Rau, Manfred, Dr. Dipl.-Ing.

(56) Entgegenhaltungen:
- EP-A- 0 791 438
- DE-A- 19 525 482
- GB-A- 2 308 322
- US-A- 4 962 676
- US-A- 5 378 282

## Beschreibung

Die Erfindung betrifft eine Werkzeugmaschine zur 3-achsigen Bearbeitung von Werkstücken mit einem Maschinengestell, mit schwenkbar gelagerten, in einer X-Y-Ebene verstellbaren Koppeln, die gelenkig miteinander verbunden sind, mit einem an einer Koppel angeordneten Werkzeugträger, der einen in der von der X-Y-Ebene unabhängigen Z-Richtung beweglichen Schlitten aufweist, und mit voneinander unabhängigen Antrieben zum Verstellen der Koppeln. - Unter Koppel wird ein Hebel oder Lenker verstanden, der an beiden Enden über einachsige und parallelachsige Gelenke an andere Bauteile angeschlossen ist.

Eine Werkzeugmaschine der eingangs beschriebenen Gattung ist bekannt (Prospekt "Dyna-M" des Werkzeugmaschinenlabors der RWTH Aachen, September 1997). Bei der bekannten Ausführung ist jede der beiden Koppeln über eine weitere Koppel mit dem Maschinengestell verbunden, sodass die vier Koppeln in einer Projektion ein W bzw. M bilden. Die Antriebe sind als schwenkbar am Maschinengestell gelagerte Vorschubeinheiten ausgebildet, die schwenkbar am Werkzeugträger gelagert sind. Durch Verstellen einer oder beider Vorschubeinheiten kann der Werkzeugträger innerhalb einer in der X-Y-Ebene liegenden Arbeitsfläche verstellt werden. Durch Verstellung des auf dem Werkzeugträger angeordneten Schlittens in Z-Richtung entsteht ein Arbeitsraum. Diese Werkzeugmaschine besitzt einen verhältnismäßig komplizierten Aufbau. Sie benötigt auch verhältnismäßig viel Raum. Nachteilig ist auch, dass die Koppeln so angeordnet sind, dass sie bei in der X-Y-Ebene wirkenden und an dem auskragenden Z-Schlitten angreifenden Belastungen stets auf Torsion beansprucht sind. Das ist für die Koppeln ein sehr ungünstiger Lastfall, dem nur durch eine Erhöhung der Torsionssteifigkeit entgegengewirkt werden kann.

Aus der US 4,962,676 ist eine Vorrichtung zur Bearbeitung von Werkstücken bekannt, die ein Maschinengestell mit schwenkbar gelagerten, in einer X-Y-Ebene verstellbaren Koppeln aufweist. Diese Koppeln sind an auf parallel zueinander angeordneten Führungen mittels Antrieben verschiebbaren Schlitten angelenkt. An einem der beiden Schlitten sind zwei Koppeln gleicher Länge gelagert, die parallelogramm-artig an ihrem dem Schlitten abgewandten Ende gelenkig an eine Verbindungskoppel angeschlossen sind. An der Verbindungskoppel ist ein Werkzeugträger befestigt.

Aufgabe der Erfindung ist es, eine Werkzeugmaschine der eingangs beschriebenen Gattung anzugeben, die sich durch einfachen und kompakten Aufbau sowie durch große Steifigkeit des Koppelsystems auszeichnet.

Diese Aufgabe wird erfindungsgemäße durch die Merkmale im Kennzeichnungsteil des Anspruchs 1 gelöst.

Die Koppeln und die beiden Schlitten mit ihren Führungen lassen sich auf verhältnismäßig kleinem Raum unterbringen, ohne dass dadurch die vom Werkzeugträger erreichbare Arbeitsfläche in der X-Y-Ebene eingeschränkt wird. Der konstruktive Aufbau ist einfacher und übersichtlich. Hinzu kommt, dass beim Einsatz von nur zwei Koppeln auch die Steifigkeit des Koppelsystems erheblich verbessert wird. Da der Werkzeugträger im Bereich des freien Endes einer Koppel angeordnet ist, wird die Arbeitsfläche in der X-Y-Ebene maximiert. Da der Werkzeugträger direkt an einer Koppel befestigt ist, verdreht er sich bei der Verstellung der Koppeln zusammen mit seiner Koppel um die eigene Achse.

Im übrigen können die Koppeln unterschiedliche Längen besitzen. Insbesondere können die unterschiedlichen Längen der Koppeln derart eingerichtet sein, dass die Koppeln bei allen Betriebsstellungen zwischen sich einen Winkel im Bereich von 90° bilden. Das trägt wesentlich zur Versteifung des Koppelsystems bei. Es ist aber auch ein geringerer Winkel von z.B. 60° möglich.

Im folgenden wird ein in der Zeichnung dargestelltes Ausführungsbeispiel der Erfindung erläutert; es zeigen:
- Figur 1: schematisch und teilweise das Maschinengestell einer Werkzeugmaschine mit einem darin angeordneten Koppelsystem,
- Figuren 2 bis 4: andere Funktionsstellungen des Gegenstandes nach Figur 1.

Die in der Zeichnung nur teilweise dargestellte Werkzeugmaschine dient zur 3-achsigen Bearbeitung von Werkstücken. Sie besitzt ein Maschinengestell, von dem nur ein Rahmen 1 dargestellt ist, dessen in einer X-Y-Ebene liegende Rahmenwangen 2, 3 einander gegenüberliegende und zueinander parallele, Führungen 18, 19 für daran verschiebbare Schlitten 4, 5 aufweisen. Jeder Schlitten 4 bzw. 5 weist einen nicht dargestellten Antrieb auf, mit dem der Schlitten 4 bzw. 5 in Richtung des Doppelpfeils 6 längs seiner Führung verstellbar ist. Die Antriebe sind unabhängig voneinander betätigbar.

Jeder Schlitten 4 bzw. 5 trägt ein Gelenk 7 für eine daran gelagerte Koppel 8 bzw. 9. Die beiden Koppeln 8 bzw. 9 sind im Bereich ihrer schlittenabgewandten Enden über ein weiteres Gelenk 10 miteinander verbunden. Die Achsen der Gelenke 7, 10 sind parallel zueinander und im wesentlichen orthogonal zu der von den Rahmenwangen 2, 3 bzw. den daran angeordneten Führungen definierten X-Y-Ebene ausgerichtet.

Im Bereich des schlittenabgewandten Endes der Koppel 9 ist auf der dem Gelenk 10 abgewandten Seite der Koppel 9 ein Werkzeugträger 11 befestigt. Der Werkzeugträger 11 weist einen Schlitten 12 auf, der orthogonal zur X-Y-Ebene, also in Z-Richtung mit Hilfe eines nicht dargestellten Antriebs verstellbar ist. Der Schlitten trägt ein nicht dargestelltes Werkzeug.

Die Koppeln 8, 9 weisen unterschiedliche Längen auf, wobei die Längen der Koppeln 8, 9 derart eingerichtet sind, dass die Koppeln 8, 9 bei allen Betriebsstellungen zwischen sich einen Winkel bilden, der im Bereich von 90° liegt.

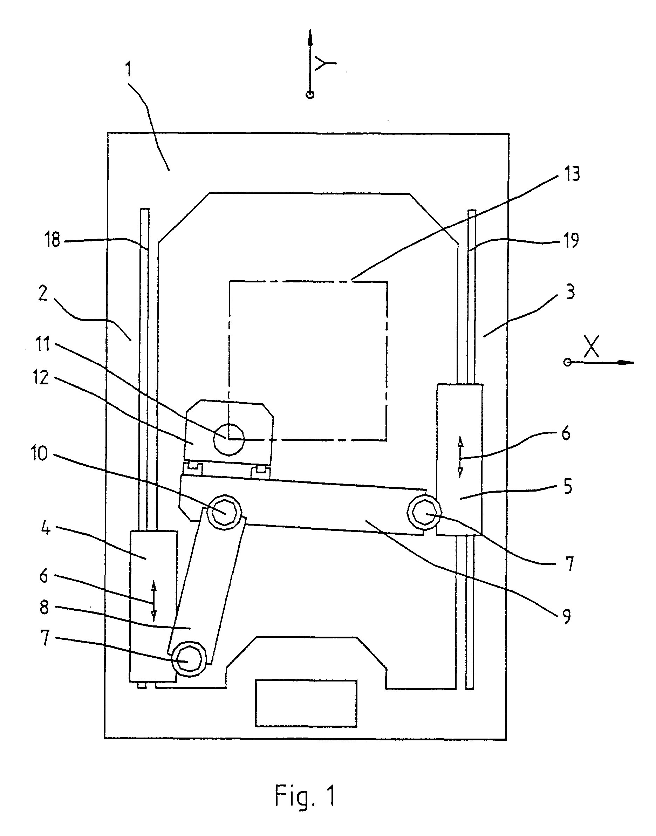

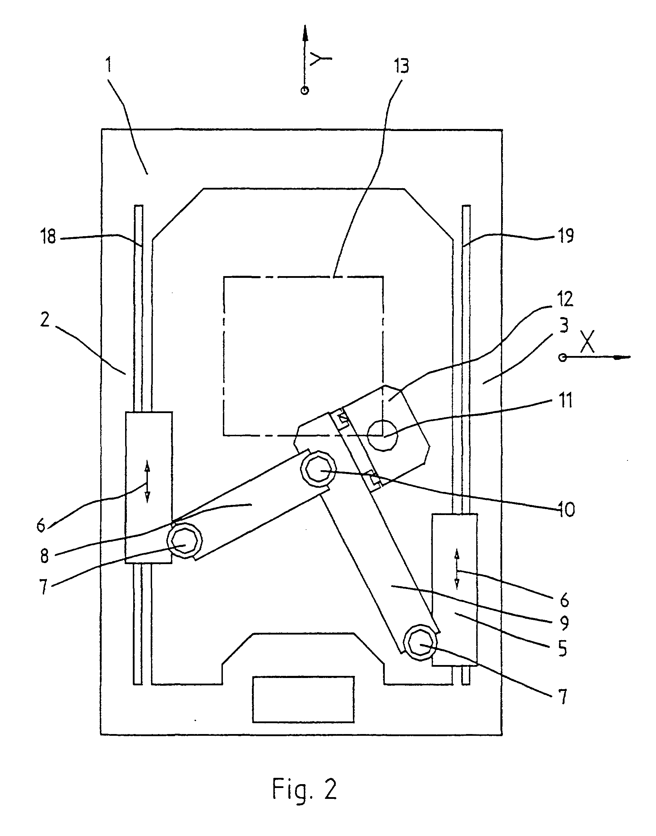

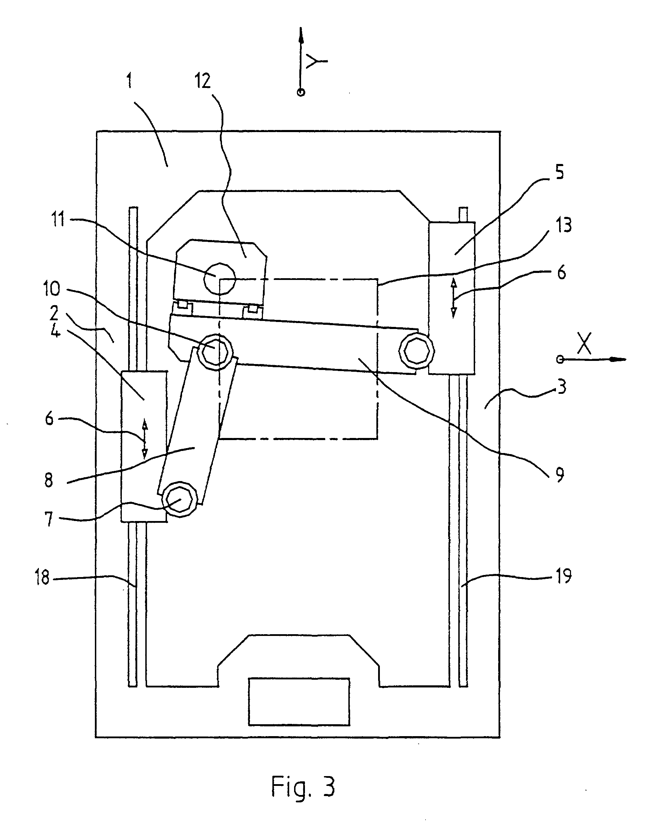

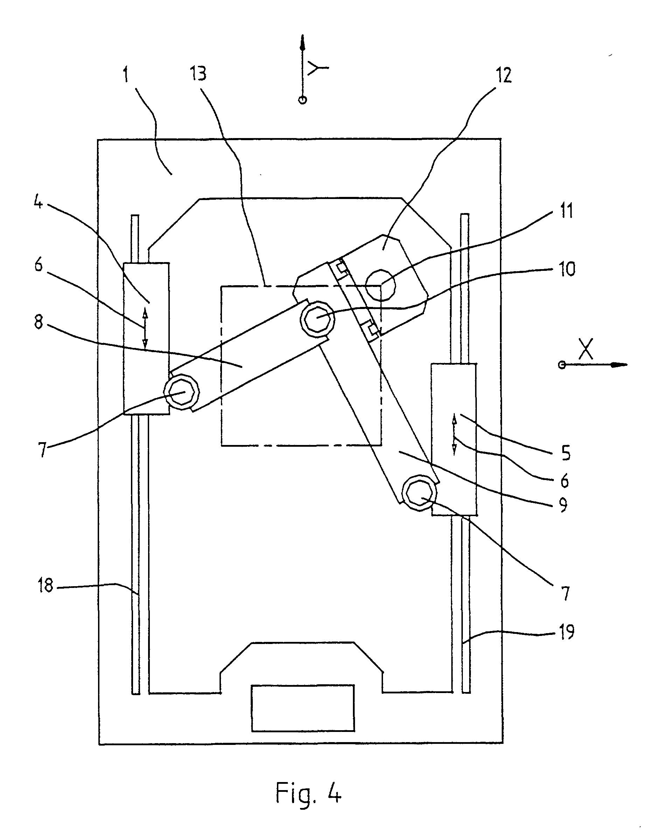

Aus einem Vergleich der Figuren 1 bis 4 entnimmt man, dass der Werkzeugträger 11 durch unabhängige Verstellung der Schlitten 4, 5 innerhalb einer in den Figuren wiedergegebenen Arbeitsfläche 13 in der X-Y-Ebene verstellt werden kann. Durch Verstellung des Schlittens 12 in Z-Richtung ergibt sich ein entsprechender Arbeitsraum. Der Werkzeugträger 11 führt keine Schwenkbewegungen um seine Achse aus, wenn er innerhalb der Arbeitsfläche 13 verstellt wird.

## Patentansprüche

1. Werkzeugmaschine zur 3-achsigen Bearbeitung von Werkstücken mit einem Maschinengestell, mit schwenkbar gelagerten, in einer X-Y-Ebene verstellbaren Koppeln (8, 9), die gelenkig miteinander verbunden sind, mit einem an einer Koppel (9) angeordneten Werkzeugträger (11), der einen in der von der X-Y-Ebene unabhängigen Z-Richtung beweglichen Schlitten (12) aufweist, und mit voneinander unabhängigen Antrieben zum Verstellen der Koppeln (8, 9), **dadurch gekennzeichnet, dass** zwei Koppeln (8, 9) an zwei Schlitten (4, 5) gelagert sind, welche in gestellfesten Führungen (18, 19) mit Hilfe je eines Antriebes verstellbar sind, wobei die Führungen (18, 19) im wesentlichen zueinander parallel angeordnet sind und die Koppeln (8, 9) im Bereich ihrer den Schlitten (4, 5) abgewandten Enden gelenkig miteinander verbunden sind und, betrachtet in der Projektion auf eine X-Y-Ebene, zwischen den Führungen (18, 19) liegen, und dass der Werkzeugträger (11) im Bereich des freien Endes einer Koppel (9) angeordnet ist .

2. Werkzeugmaschine nach Anspruch 1, **dadurch gekennzeichnet, dass** die Koppeln (8, 9) unterschiedliche Länge besitzen.

3. Werkzeugmaschine nach Anspruch 1 oder 2, **dadurch gekennzeichnet, dass** die Koppeln (8, 9) bei allen Betriebsstellungen zwischen sich einen Winkel im Bereich von 90° bilden.

## Claims

1. Machine tool for triaxial machining of work pieces with a machine rack, the machine tool comprising couplers (8, 9), which are arranged slidably, adjustable in an X-Y-plane, which are hinge-connected, a tool carrier (11) arranged at one coupler (9), comprising a skid which is movable in the Z-direction independent from the X-Y-plane, and independent drives for adjusting the couplers (8, 9), **characterized in that** two couplers (8, 9) are arranged at two skids (4, 5), which are adjustable in rack-proof guides (18, 19) by the aid of one independent drive each, wherein the guides (18, 19) are arranged substantially in parallel to each other and wherein the couplers (8, 9) are hinge-connected to each other in the area of their ends averted from the skids (4, 5) and lie between the guides (18, 19), if viewed in a projection of an X-Y-plane, and that the tool carrier (11) is arranged in the area of the free end of one coupler (9).

2. Machine tool according to claim 1, **characterized in that** the couplers (8, 9) have different lengths.

3. Machine tool according to claim 1 or 2, **characterized in that** the couplers (8, 9) form an angle between them in a range of 90° in all operational positions.

## Revendications

1. Machine-outil pour l'usinage à trois axes de pièces avec un bâti de machine muni de bielles (8, 9) logées de manière à pivoter, orientables dans un plan X-Y, qui sont reliées les unes aux autres par des charnières, avec un support d'outil (11) disposé sur une bielle (9) qui comporte un chariot (12) mobile dans le sens Z indépendant du plan X-Y et avec des entraînements indépendants les uns des autres pour le déplacement des bielles (8, 9), **caractérisée en ce que** deux bielles (8, 9) sont logées dans deux chariots (4, 5) qui sont déplaçables dans des glissières de guidage (18, 19) solidaires du bâti à l'aide d'un entraînement individuel, les glissières de guidage (18, 19) étant disposées essentiellement parallèlement l'une par rapport à l'autre et les bielles (8, 9) étant reliées les unes aux autres par des charnières dans la zone de leurs extrémités opposées aux chariots (4, 5) et, vues en projection dans un plan X-Y, étant placées entre les glissières de guidage (18, 19) et **en ce que** le support d'outil (11) est placé dans la zone de l'extrémité libre de la bielle (9).

2. Machine-outil selon la revendication 1, **caractérisée en ce que** les bielles (8, 9) ont des longueurs différentes.

3. Machine-outil selon la revendication 1 ou 2, **caractérisée en ce que** les bielles (8, 9) forment entre elles un angle d'environ 90° dans toutes les positions de fonctionnement.
